# EUROPEAN PATENT SPECIFICATION

(11) **EP 0 798 628 B1**
(45) Date of publication and mention of the grant of the patent: **01.09.2004**
(21) Application number: 97104798.0
(22) Date of filing: 20.03.1997
(51) Int. Cl.: G06F 3/06

(54) **Storage system**
Speichersystem
Sytème de stockage

(30) Priority: 28.03.1996 JP 7445996
(43) Date of publication of application: 01.10.1997
(73) Proprietor: Dainippon Screen Mfg. Co., Ltd., Kamikyo-ku, Kyoto (JP)
(72) Inventor: Ikefuji, Kunio, c/o Dainippon Screen Mfg. Co.,Ltd., Kumiyama-cho, Kuze-gun, Kyoto (JP)
(74) Representative: WILHELMS, KILIAN & PARTNER Patentanwälte

(56) References cited:
- EP-A- 0 458 555
- WO-A-95/23376
- GB-A- 2 257 273

## Description

### BACKGROUND OF THE INVENTION

### Field of the Invention

The present invention relates to a storage system which operates two storage devices in a prepress equipment system which treats a large quantity of image data.

### Description of the Background Art

In general, such a prepress equipment system mentioned above uses a processing system which connects a server (e.g., workstation) and a plurality of clients (e.g., desk-top computer). (Such a processing system will be hereinafter referred to as "client-server system.")

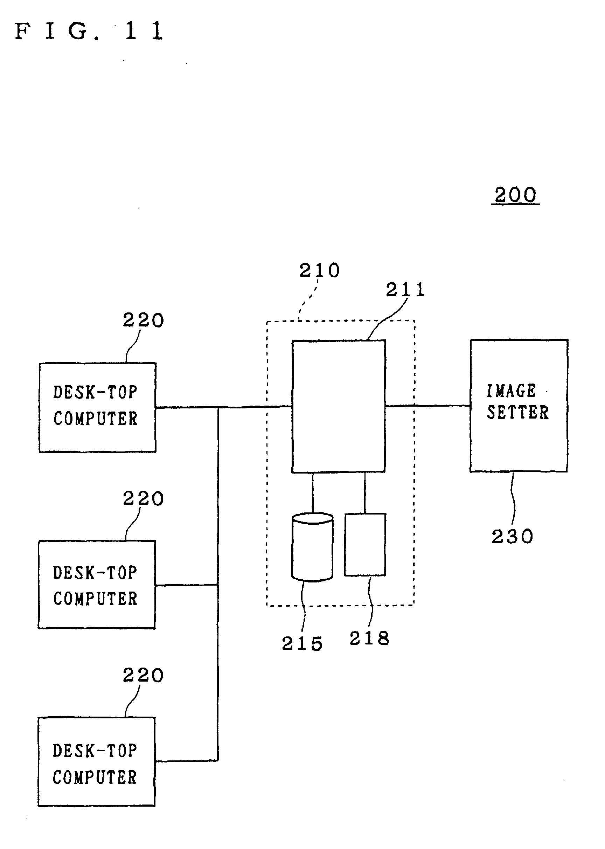

Fig. 11 is a conceptual view of a printing plate equipment system 200 which uses a client-server system. A workstation 210 which serves as a server is connected with three desk-top computers 220 which serve as clients and an image setter 230 which outputs an image. In addition, the workstation 210 comprises a processing unit 211 which processes image data, a magnetic disk unit 215 and an additionally-writable optical disk unit 218. A magnetic disk unit 215 and an additionally-writable optical disk unit 218 store image data which are yet to be processed and image data which were already processed. When image data are to be processed with the printing plate equipment system 200, an operator uses the desk-top computers 220 and perform a layout processing.

In general, image data of an image which is outputted from the image setter 230 (hereinafter "real image data") have a high pixel density and are a large quantity of data, if the real image data are treated as they directly are on the desk-top computers 220 whose processing capabilities are low, the efficiency of processing drops remarkably. Further, when a layout processing is to be performed on the desk-top computers 220, it is necessary only to confirm an image on a display (not shown) of each desk-top computer 220, and therefore, use of a real image with a high pixel density is not necessary. Therefore, the workstation 210 creates image data of the image of a low density (hereinafter "rough image data") which is obtained by decimating pixels from the real image, and the rough image data are used for the layout processing on the desk-top computers 220. Upon the layout processing using the rough image data, the workstation 210 replaces the rough image data with the original real image data and transfers the real image data to the image setter 230, so that the real image data are outputted. In this manner, the load upon the desk-top computers 220 is reduced and the processing efficiency is improved, and hence, it is possible to obtain an output image of a high density. As herein described below, the series of operations above, i.e., a layout processing using rough image data on the client side and subsequent replacement of the rough image data with real image data on the server side to thereby improve the processing efficiency will be referred to as "OPI (Open Prepress Interface)."

By the way, the workstation 210 described above comprises two storage devices. Of the two, the magnetic disk unit 215 allows a high access efficiency, while the additionally-writable optical disk unit 218 has a large capacity and a high reliability. For image processing such as a layout processing, real image data are stored in the magnetic disk unit 215 having a high access efficiency, and the processing unit 211 which is disposed within the workstation 210 decimates the real image data and creates rough image data. At this stage, unless the rough image data are associated with the original real image data, later replacement of the rough image data after the layout processing will be met by a trouble.

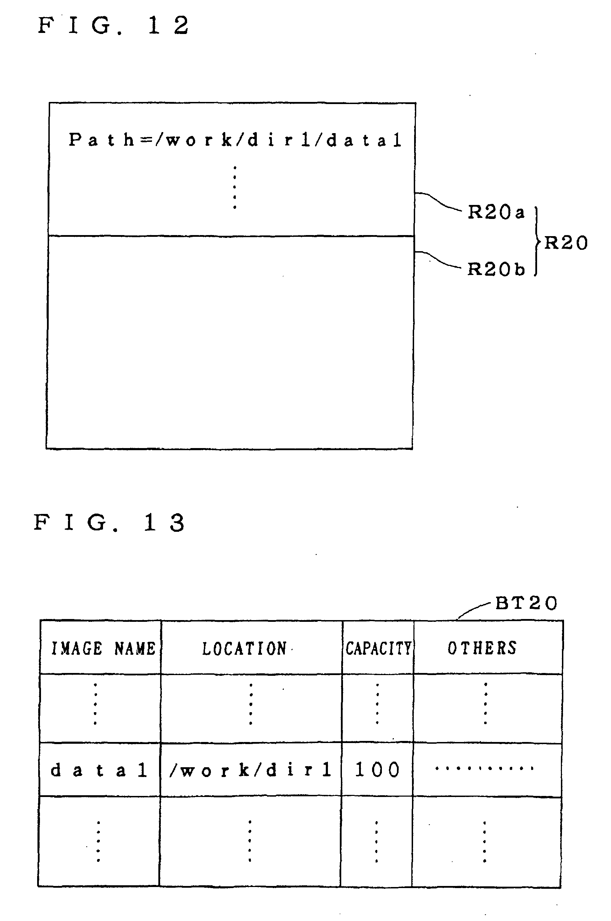

Fig. 12 is a view showing a structure of rough image data. The rough image data R20 are comprised of a header part R20a and an image information part R20b. As shown in Fig. 12, the header part R20a describes that the rough image data R20 are to be replaced with real image data which are named "data1" and stored at a reserve location in a tree-like structure (hereinafter "directory") called "/work/dir1" within the magnetic disk unit 215. Meanwhile, the image information part R20b describes that a substantial part of the rough image data, which is needed to for an operator to visually confirm an image on the desk-top computers 220, in a predetermined format. Hence, after the layout processing, the processing unit 211 of the workstation 210 searches the magnetic disk unit 215 in accordance with a directory name which is described in the header part R20a, and replaces the rough image data R20 with original real image data. The rough image data R20 are stored in storage devices (not shown) of the desk-top computers 220, depending on the need on the part of an operator.

Although having a high access efficiency, the magnetic disk unit 215 has a lower reliability and a smaller capacity than the additionally-writable optical disk unit 218. Hence, the real image data described above which have replaced are transferred to the additionally-writable optical disk unit 218, in order to prevent disappearance of the real image data and to ensure a space in the magnetic disk unit 215.

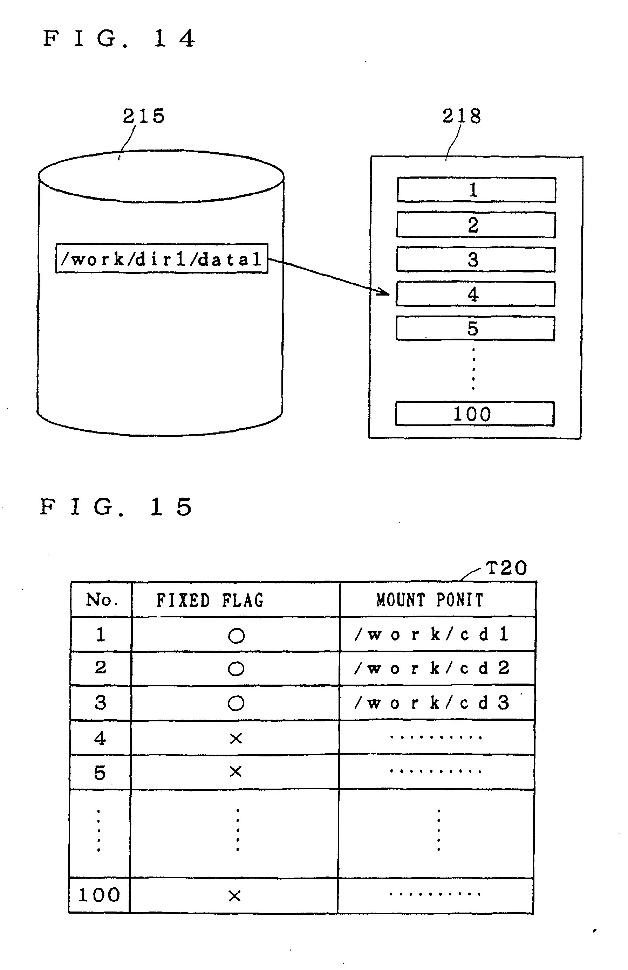

Now, a conventional manner in which the real image data are transferred will be described with reference to Figs. 14 and 15. Fig. 14 is a view for describing conventional transfer processing for transferring the real image data from the magnetic disk unit 215 to the additionally-writable optical disk unit 218. Fig. 15 is a view of a conventional processing table T20 which is referred to for the purpose of the transfer processing. The processing table T20 as well is stored in the magnetic disk unit 215.

When the real image data "data1" which are stored in the directory "/work/dir1" within the magnetic disk unit 215 are to be transferred, first, the processing unit 211 searches the processing table T20 which is shown in Fig. 15. At this stage, the processing unit 211 confirms whether fixed flags are true or false, starting from No. 1 in the processing table T20. It is to be noted that "No." in the processing table T20 corresponds to disk numbers within the additionally-writable optical disk unit 218 which is shown in Fig. 14, and a fixed flag being "true" (denoted as a circle symbol in Fig. 15) indicating that the corresponding disk already stores data while a fixed flag being "false" (denoted as a cross symbol in Fig. 15) indicating that the corresponding disk is yet to store. In the processing table T20 which is shown in Fig. 15, the disk No. 4 is yet to store, and therefore, the real image data "data1" are transferred to the disk No. 4.

When a recording medium which is usable even off the line, such as an additionally-writable optical disk, is to be used in the printing plate equipment system 200, a reserve location (hereinafter referred to as "mount point") is set which is one mode of and equivalent to a directory described above and which is unique to each disk. For instance, a mount point "/work/cd4" is set in the disk No. 4, the real image data "data1" are transferred to the mount point. At the same time, a fixed flag which corresponds to the disk No. 4 in the processing table T20 is changed to "true" and "/work/cd4" is set as a mount point. As the real image data "data1" are transferred to the additionally-writable optical disk unit 218, the real image data "data1" and the directory "/work/dir1" in the magnetic disk unit 215 are deleted, which completes the transfer processing.

In short, the transfer processing described above is equal to changing the reserve name "/work/dir1/data1" (hereinafter referred to as "path name") of the tree-like structure of the real image data to a path name called "/work/cd4/data1."

After the layout processing described above, it is in some cases necessary for the operator to perform the layout processing once again. In this case as well, the operator performs the layout processing while using rough image data. As described earlier, during the first layout processing, the path name "/work/dir1/data1" is described in the header part R20a of the rough image data R20 which are stored in the desk-top computers 220.

However, after the real image data are transferred to the additionally-writable optical disk unit 218, the path name of the real image data was already changed to "/work/cd4/data1," the rough image data R20 does not correspond to the real image. In this case, it is necessary to transfer the real image data which are stored in the additionally-writable optical disk unit 218 back to the magnetic disk unit 215 and change the path name to the original path name, or to create rough image data once again from the real image data which are stored in the additionally-writable optical disk unit 218.

When the real image data are transferred back to the magnetic disk unit 215, it is necessary to delete unnecessary data in order to ensure the capacity within the magnetic disk unit 215. In the printing plate equipment system 200 which a plurality of operators use, identification of unnecessary data is extremely difficult, and therefore, a manager of the system must confirm with each operator. This remarkably deteriorates the processing efficiency of the printing plate equipment system 200 when the real image data are to be transferred back to the magnetic disk unit 215.

On the other hand, creation of rough image data again from the real image data which are stored in the additionally-writable optical disk unit 218 results in two pieces of rough image data for the same real image data. Hence, an operator must handle duplication of management of the rough image data regarding one piece of real image data. As a result, the processing efficiency of the OPI processing degrades.

Further, in a system which handles a large quantity of data, the data are processed into a database very often. Fig. 13 is a view of a database registration table BT20 in the printing plate equipment system 200. When registration to a database is executed with the real image data "data1" stored in the magnetic disk unit 215, as shown in Fig. 13, the directory "/work/dir1" is registered as a location of the real image data "data1." However, when the real image data are transferred to the additionally-writable optical disk unit 218, the path name is changed as described above, and therefore, search using the database registration table BT20 is not possible. Thus, registration to the database is impossible until after desired data are transferred to the additionally-writable optical disk unit 218, thereby deteriorating the efficiency.

Moving a directory and the data stored therein from first to second storing means, using device-independent path, names, is known from GB-A-2 257 273 and WO 9 523 376 A.

### SUMMARY OF THE INVENTION

The present invention is as defined in claims 1 and 5.

Since a change in the name of the directory is prevented, a process which requires to refer to the directory name can be performed at any desired timing and it is possible to prevent other operators from using the directory by mistake.

Accordingly, an object of the present invention is to a storage system which comprises two storage devices and which efficiently performs a predetermined process on data even when the data are transferred between the two storage devices.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram showing a structure of a prepress processing system which is one example of a system to which a storage system according to the present invention is applicable;
Fig. 2 is a flow chart showing a sequence of processing image data in the prepress processing system of Fig. 1;
Fig. 3 is a flow chart showing a sequence of storing real image data into a magnetic disk unit;
Fig. 4 is a flow chart showing a sequence of storing real image data into an additionally-writable optical disk unit;
Fig. 5 is a view of a control table which is searched when image data are stored in the magnetic disk unit;
Fig. 6 is a view of a control table after the real image data are stored in the magnetic disk unit;
Fig. 7 is a schematic view for describing a manner in which real image data are transferred;
Fig. 8 is a conceptual diagram for describing a difference between a mount point and a directory which is associated with a nickname;
Fig. 9 is a conceptual diagram for describing a condition after one of the directories of Fig. 8 is moved to the additionally-writable optical disk unit;
Fig. 10 is a view showing a displaying condition of displaying means of a desk-top computer in the condition which is shown in Fig. 8;
Fig. 11 is a conceptual diagram of a printing plate equipment system which adopts a client-server system;
Fig. 12 is a view showing a structure of rough image data;
Fig. 13 is a view of a database registration table in the printing plate equipment system of Fig. 11;
Fig. 14 is a view for describing conventional transfer processing for transferring real image data from a magnetic disk unit to an additionally-writable optical disk unit; and
Fig. 15 is a view of a conventional processing table which is referred to during transfer processing.

### DESCRIPTION OF THE PREFERRED EMBODIMENTS

In the following, a preferred embodiment of the present invention will be described in detail with reference to the drawings.

In the description below, after describing an outline of a structure of a prepress processing system which is one example of a system to which a storage system according to the present invention is applicable, the storage system according to the present invention will be described.

### A: Structure Of Prepress Processing System

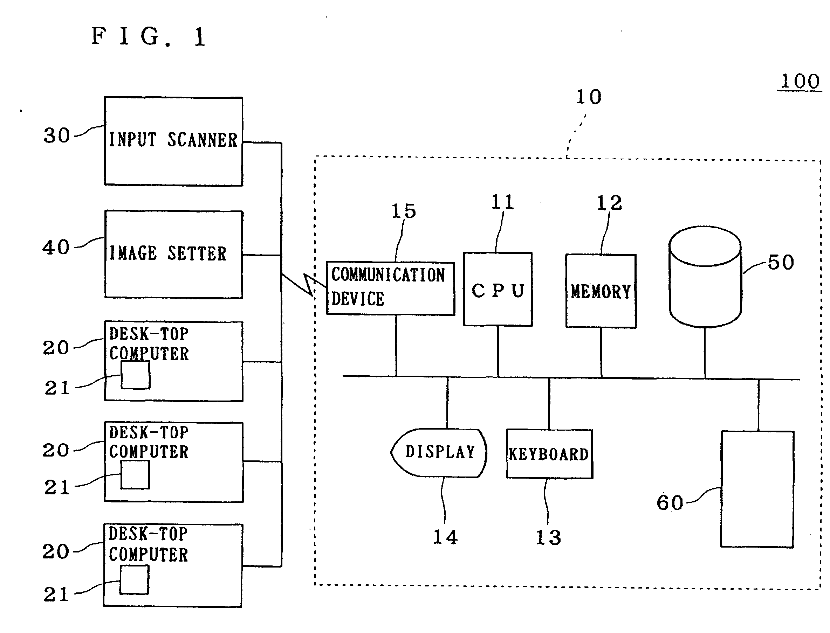

Fig. 1 is a block diagram showing a structure of a prepress processing system 100 which is one example of a system to which a storage system according to the present invention is applicable. The prepress processing system 100 adopts a client-server system and comprises a workstation 10 which serves as a server, three desk-top computers 20 which serve as clients, an input scanner 30 for reading an original, and an image setter 40 for outputting a processed image.

The workstation 10 comprises a CPU 11 which executes calculation on image data and supplies an instruction to each device which is comprised in the workstation 10, a memory 12 for storing a processing program with respect to the CPU 11, a keyboard 13 which an operator uses for supplying an instruction to the workstation 10, a display 14 which an operator uses for confirming an image and a message from the workstation 10, a communication device 15 which transfers a signal between the workstation 10, the desk-top computers 20 and the like, a magnetic disk unit (first storing means) 50 having a high accessing efficiency, and an additionally-writable optical disk unit (second storing means) 60 having a large capacity and reliability.

The desk-top computers 20 each comprise an input device and a storage device not shown and displaying means 21. An operator inputs an instruction through the desk-top computer 20 so that it is possible to execute predetermined processing on data which are within the workstation 10 through the communication device 15. The number of the desk-top computers 20 is not limited to three. Rather, any number of the desk-top computers 20 may be disposed as far as the desk-top computers 20 can function as a system.

### B: Sequence Of Processing Image Data In Prepress Processing System

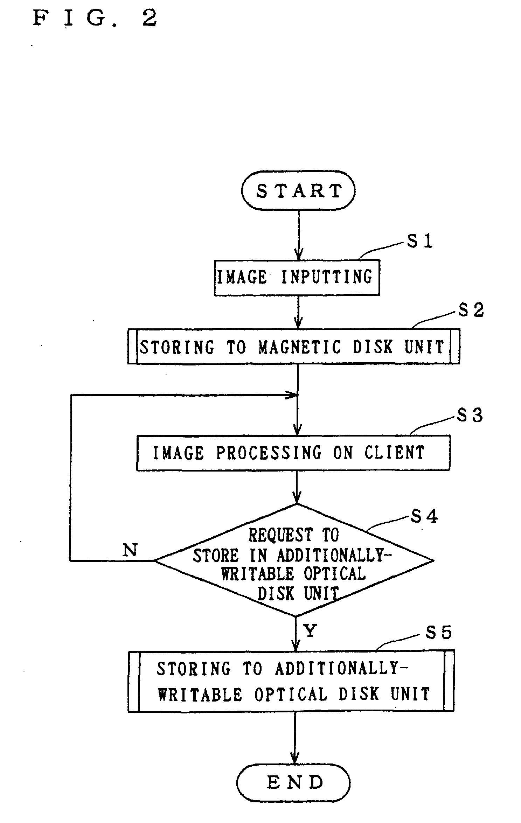

Fig. 2 is a flow chart showing a sequence of processing image data in the prepress processing system 100. Now, a sequence of storing image data in the magnetic disk unit 50 and the additionally-writable optical disk unit 60 will be described, with reference to Fig. 2.

During image processing within the prepress processing system 100, first, the input scanner 30 reads an original and sends real image data of the original to the workstation 10 through communication device 15 (Step S1). The real image data which are received by the communication device 15 are stored in the magnetic disk unit 50 after once stored in the memory 12 (Step S2).

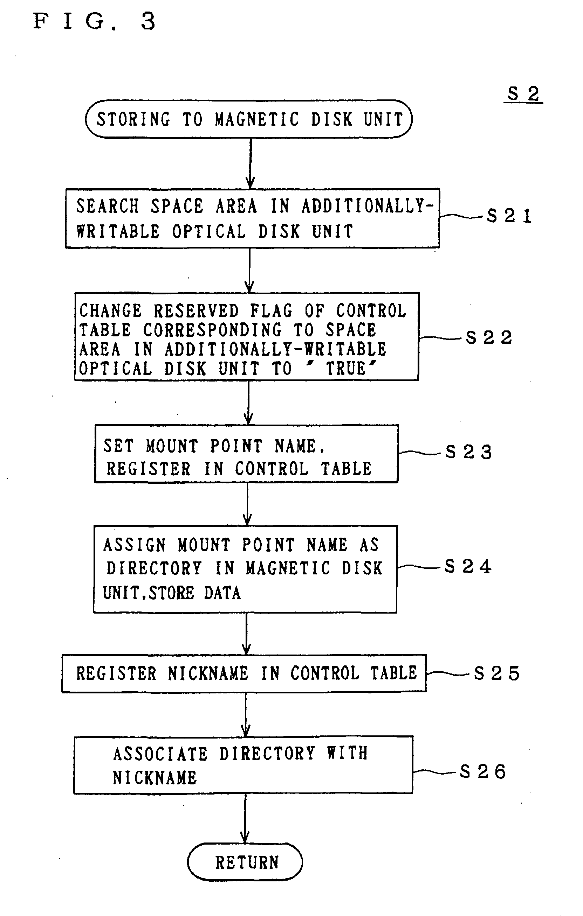

Fig. 3 is a flow chart showing a sequence of storing the real image data into the magnetic disk unit 50. First, at a step S21, a space area in the additionally-writable optical disk unit 60 (i.e., a disk which is yet to store among disks which exist in the additionally-writable optical disk unit 60) is searched. Search of the space area is realized as the CPU 11 searches a control table which is stored in the magnetic disk unit 50.

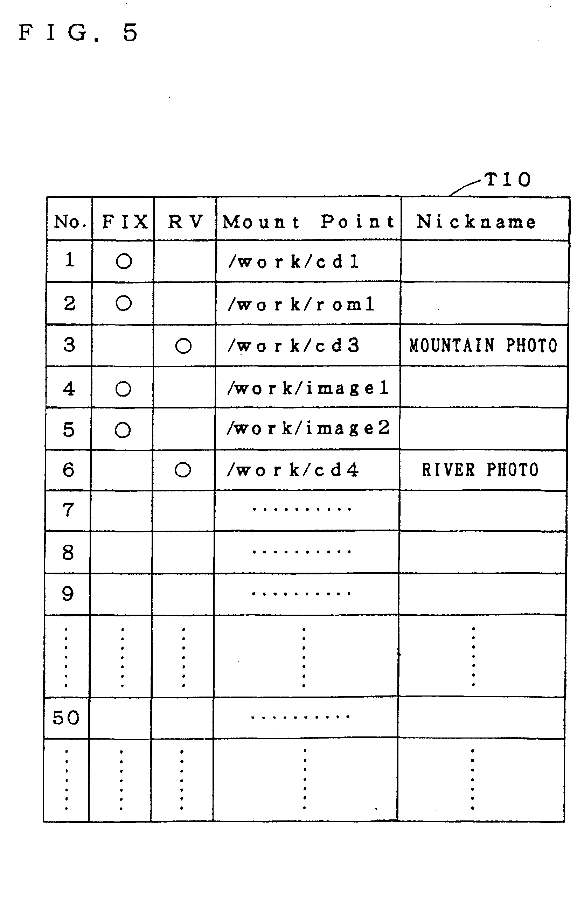

Fig. 5 is a view of a control table T10. In the control table T10, the symbol "No." denotes the numbers of the disks which exist in the additionally-writable optical disk unit 60, the symbol "FIX" denotes fixed flags, the symbol "RV" denotes reserved flags, the symbol "Mount Point" denotes mount points on the additionally-writable optical disk unit 60 side, and the symbol "Nickname" denotes nicknames (i.e., identifier) of data which are stored in the magnetic disk unit 50.

The CPU 11 searches the control table T10. Finding an area (each disk which exists in the additionally-writable optical disk unit 60) in which both a fixed flag and a reserved flag are "false" (blank in the control table T10), the CPU 11 changes the reserved flag of the area to "true" (circle in the control table T10) (Step S22). That is, in the control table T10 in Fig. 5, the disk No. 7 is yet to store, a reserved flag which corresponds to the disk No. 7 is changed to "true."

Next, at a step S23, the name of a mount point on the additionally-writable optical disk unit 60 side which corresponds to the disk No. 7 is set and registered in the column "Mount Point" in the control table T10. At this stage, an operator may set the name of the mount point, or alternatively, the CPU 11 may set the name of the mount point. In addition, although any desired name may be set as the name of the mount point, a name which is convenient for management within the additionally-writable optical disk unit 60 is desirable. For example, in this preferred embodiment, as the name of the mount point in the disk No. 7, "/work/cd7" is set. At this stage, however, in reality, the mount point is not set in the additionally-writable optical disk unit 60. Rather, only registration in the column "Mount Point" corresponding to the area where the reserved flag is changed to "true" in the control table T10 is done.

In the situation above, if the mount point name to be set has been already registered in the control table T10 and if the corresponding reserved flag or the corresponding fixed flag is "true," it is impossible to set the mount point name but it is necessary to set a new mount point name. For instance, in the situation above, if one tries to set the mount point name for the disk No. 7 as "/work/cd3," since this mount point name has been already registered as the mount point name for the disk No. 3 and since the corresponding reserved flag is "true," it is necessary to newly set a different mount point name. In this manner, it is possible to prevent an operator from setting a mount point over a mount point which is set by other operator.

Next, at a step S24, the mount point name above is assigned as a directory in the magnetic disk unit 50, and the real image data are stored in this directory. Hence, if "data1" is given as a file name of the real image data according to this preferred embodiment, "/work/cd7/data1" is the path name of the real image data which are stored in the magnetic disk unit 50. Since the mount point named "/work/cd7" has not been set in the additionally-writable optical disk unit 60, no identical path names exist in the workstation 10. This presents no conflict in the prepress processing system 100 as a whole.

Next, at a step S25, an operator determines a nickname of the mount point, and the CPU 11 registers the nickname in the column "Nickname" in the control table T10. As the nickname, any name which is easy for the operator to manage may be used. For instance, a nickname "Flower Photo 1" is given to the mount point "/work/cd7" in this preferred embodiment.

Next, at a step S26, the CPU 11 associates the directory named "/work/cd7" with the nickname "Flower Photo 1." This makes it possible for the operator to treat the directory "/work/cd7" within the magnetic disk unit 50 and the nickname "Flower Photo 1" as equivalents.

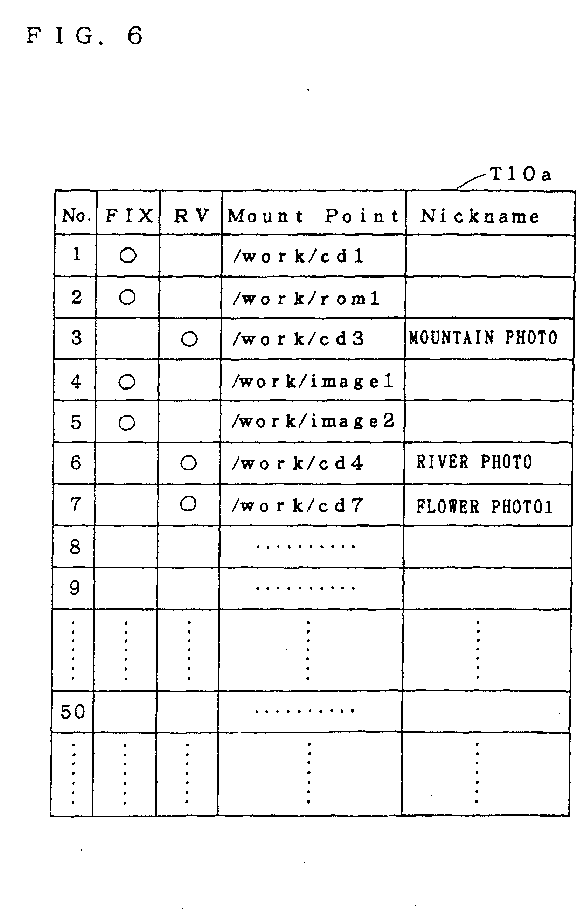

Fig. 6 is a view of a control table T10a after the real image data are stored in the magnetic disk unit 50. The reserved flag corresponding to the disk No. 7 is changed to "true." The column "Mount Point" describes "/work/cd7" and the column "Nickname" describes "Flower Photo 1."

Referring to Fig. 2 again, image processing is carried out on the part of the client (Step S3), after the real image data are stored in the magnetic disk unit 50 in the manner described above. Although optional processing which an operator desires may be executed as the image processing, in this preferred embodiment, layout processing using the desk-top computer 20 is carried out. The desk-top computers 20 have a lower processing capability as compared with the workstation 10, and therefore, if the real image data are treated as they are, the efficiency of the processing degrades. To deal with this, the CPU 11 decimates the real image data and creates rough image data, so that the rough image data are used for the layout processing. The rough image data are stored in the magnetic disk unit 50 and the storage devices of the desk-top computers 20.

Next, proceeding to a step S4, upon the layout processing or in accordance with some necessity (e.g., for the purpose of preventing erasure of data), the operator demands to store the data in the additionally-writable optical disk unit 60, so that the sequence further proceeds to a step S5 whereat the real image data are stored in the additionally-writable optical disk unit 60.

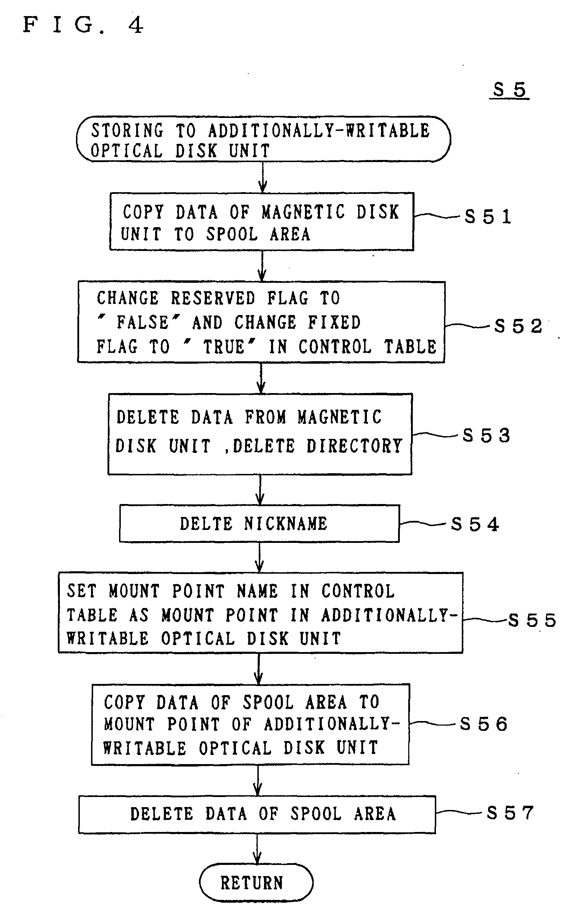

Fig. 4 is a flow chart showing a sequence of storing the real image data into the additionally-writable optical disk unit 60. First, at a step S51, the real image data for which the path name in the magnetic disk unit 50 is "/work/cd7/data1" are copied in a spool area. The spool area is a temporary relief area which is created in the magnetic disk unit 50.

Next, proceeding to a step S52, the reserved flag (RV) which corresponds to the disk No. 7 of the control table T10a (See Fig. 6) is changed to "false" and the fixed flag (FIX) is changed to "true." The real image data having the path name "/work/cd7/data1" are deleted from the magnetic disk unit 50, and in addition, the directory "/work/cd7" is deleted (Step S53). Following this, the nickname "Flower Photo 1" is deleted from the column "Nickname" in the control table T10a (Step S54).

Next, proceeding to a step S55, the mount point name "/work/cd7" which is registered in the column "Mount Point" of the control table T10a is set as a mount point in the additionally-writable optical disk unit 60. At this stage, since the directory "/work/cd7" has been already deleted from the magnetic disk unit 50, no identical path names exist in the workstation 10.

Next, proceeding to a step S56, the real image data "data1" copied to the spool area are copied to the mount point "/work/cd7" in the additionally-writable optical disk unit 60. At last, the real image data "data1" in the spool area are deleted (Step S57).

In the process described above, the steps S52 to S54 may not be followed in the order which is shown in the flow chart but may be executed in a changed order.

When the real image data are stored in the additionally-writable optical disk unit 60 in the manner described above, it then follows that the real image data are transferred to the additionally-writable optical disk unit 60 from the magnetic disk unit 50 while preserving the path name "/work/cd7/data1."

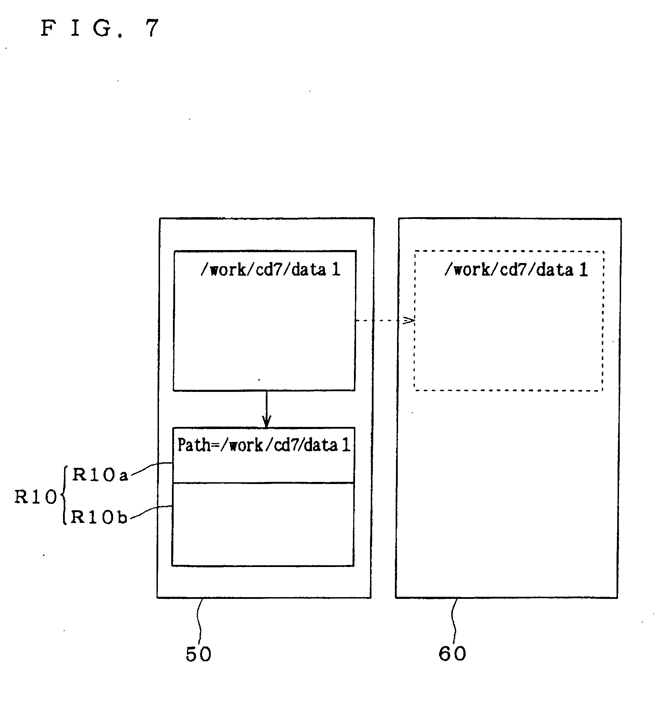

Fig. 7 is a schematic view for describing the manner in which the real image data are transferred. Rough image data R10 which are created from the real image data having the path name "/work/cd7/data1" is comprised of a header part R10a and an image information part R10b. The header part R10a describes the path name "/work/cd7/data1." By means of the path name which is described in the header part R10a, the rough image data R10 are associated with the original real image. As described above, since the path name of the real image remains unchanged but remains as "/work/cd7/data1" as originally given, even after the real image data are transferred to the additionally-writable optical disk unit 60 from the magnetic disk unit 50, an operator can easily execute layout processing again without returning the real image data back to the magnetic disk unit 50 or without creating a rough image once again with respect to the real image data transferred to the additionally-writable optical disk unit 60. As a result, the efficiency of the OPI processing is improved.

During registration in a database as well, a path name of data is registered as the location of the data. Hence, according to this preferred embodiment, even after the real image data are transferred to the additionally-writable optical disk unit 60 from the magnetic disk unit 50, since the path name of the real image remains unchanged but remains as "/work/cd7/data1" as originally given, an operator can register in the database at any desired time. This improves the efficiency of registration.

By the way, in this preferred embodiment, although an operator can perform desired processing without considering whether data which are to be processed exist in the magnetic disk unit 50 or in the additionally-writable optical disk unit 60, since a path name always remains unchanged, it is difficult to confirm which storage device stores the data. The two storage devices above are to be used independently in accordance with the respective purposes, and therefore, it is necessary for an operator to grasp which one of the storage devices stores the data which are to be processed. To this end, the nickname which is registered at the step S25 in Fig. 3 exhibits a function of informing an operator of the location of the directory which is associated with the nickname.

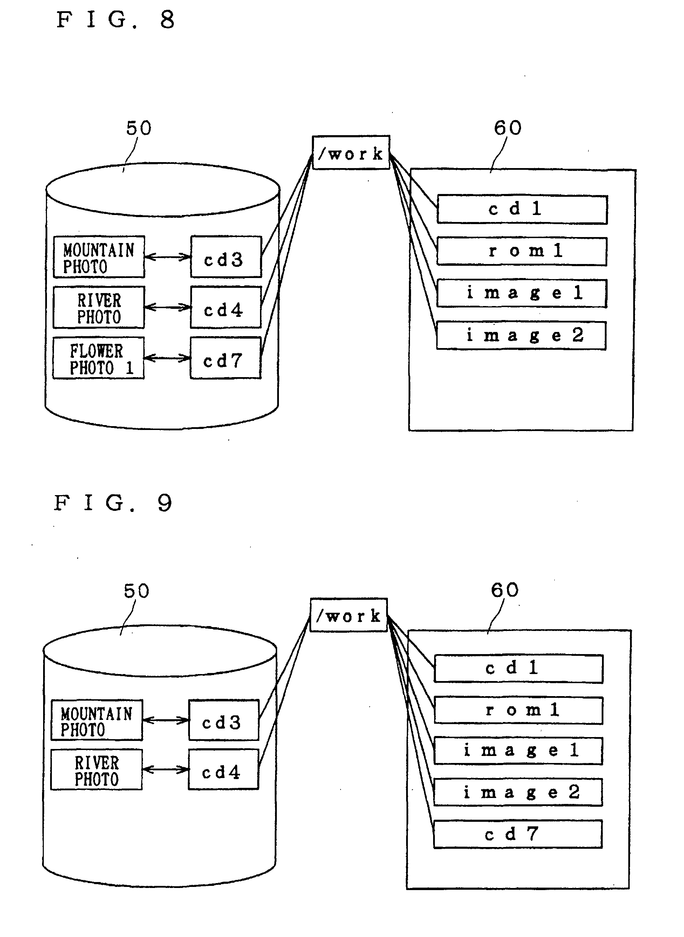

Figs. 8 and 9 are conceptual diagrams for describing a difference between a mount point and a directory which is associated with a nickname. Fig. 8 shows a condition where the directory "/work/cd7" exists in the magnetic disk unit 50 (i.e., the condition upon the step S2 in Fig. 2) so that the directory or the mount point is created in the magnetic disk unit 50 or the additionally-writable optical disk unit 60 in accordance with the control table T10a (See Fig. 6). A nickname is associated with each directory which exists in the magnetic disk unit 50. For instance, the nickname "Flower Photo 1" is associated with the directory "/work/cd7" as described earlier.

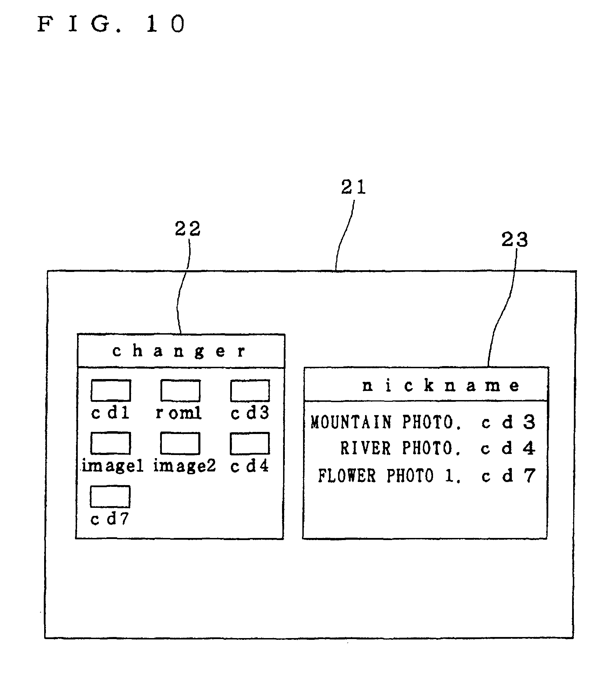

Fig. 10 is a view showing a displaying condition of the displaying means 21 of the desk-top computer 20 in the condition which is shown in Fig. 8. On the displaying means 21 of the desk-top computer 20, a display box 22 reading "changer" and a display box 23 reading "nickname" are displayed. The display box 22 displays all mount point names which are registered in the control table T10a, namely, all directories which exist in the magnetic disk unit 50 and all mount points which exist in the additionally-writable optical disk unit 60. The display box 23 displays nicknames which are associated with the directories which exist in the magnetic disk unit 50. Hence, an operator can judge which one of the mount point names which are displayed in the display box 22 exists in the magnetic disk unit 50, by confirming the display box 23.

Next, Fig. 9 showing a condition after the directory "/work/cd7" which exists in the magnetic disk unit 50 is moved to the additionally-writable optical disk unit 60 (i.e., the condition upon the step S5 in Fig. 2), a new mount point "/work/cd7" is set in the additionally-writable optical disk unit 60 and the directory "/work/cd7" is deleted from the magnetic disk unit 50. Further, in accordance with this, the nickname "Flower Photo 1" which is associated with the directory "/work/cd7" as well is deleted. As a result, "Flower Photo 1" is deleted from the display box 23 of the desk-top computer 20, so that the operator can confirm transfer of the directory "/work/cd7" to the additionally-writable optical disk unit 60. At this stage, the contents which are displayed in the display box 22 remain unchanged.

### Modification

While the foregoing has described the present invention in relation to the preferred embodiment above, the present invention is not limited to the preferred embodiment above. For example, the first storage device is not limited to a magnetic disk unit but may be a storage device having a high accessing efficiency (e.g., a disk array (which is a highly reliable storage device which is comprised of a plurality of magnetic disk units)), etc.

Further, the second storage device is not limited to an additionally-writable optical disk unit but may be a highly reliable storage device which has a large capacity, such as a magneto-optical disk unit or a magnetic tape (both being readable and writable). When a magneto-optical disk unit or a magnetic tape is used as the second storage device, it is possible to move a directory in one way and the other in an easy manner. When a directory is to be moved from the second storage device to the first storage device, a reserved flag is set as "true", a fixed flag is set as "false" in the control table, and an operator registers any desired new nickname again. As a result, the directory is moved easily.

Moreover, although this preferred embodiment requires to execute predetermined image processing on image data before storing the image data in the additionally-writable optical disk unit 60, the image processing may be carried out after the image data in the additionally-writable optical disk unit 60.

Further, in this preferred embodiment, although the display box 23 of the desk-top computer 20 displays nicknames which are associated with directories which are stored in the magnetic disk unit 50 so that an operator can confirm the location of a directory, other displaying means, such as a change in the color of a mount point name which is displayed in the display box 22, may be used for confirmation.

Still further, application of the storage system according to the present invention is not limited to a prepress processing system. Rather, the storage system according to the present invention may be applied to a system which comprises two storage devices and transfers a directory between the two storage devices.

While the invention has been described in detail, the foregoing description is in all aspects illustrative and not restrictive. It is understood that numerous other modifications and variations can be devised without departing from the scope of the invention.

## Claims

1. An apparatus for storing data and transferring data from first storing means to second storing means, comprising:
a) means for making a directory where said data is to be stored in said first storing means;
b) means for storing said data into said directory in said first storing means;
c) means for saving said data from said directory in said first storing means to a relief area;
d) means for moving said directory from said first storing means to said second storing means with the same path name as that for said directory being maintained; and
e) means for transferring said data from said relief area to said directory moved to said second storing means, wherein
said means a) comprises first identifying means which is enabled when said directory is made in said first storing means,
said means d) comprises second identifying means which is enabled when said directory moves to said second storing means, and
duplication of a directory having the same path name as that for said directory in either said first storing means or said second storing means is prohibited in case that said first identifying means or said second identifying means is enabled.

2. The apparatus of claim 1, wherein
either said first identifying means or said second storing means comprises flag means.

3. The apparatus of claim 1, further comprising:
f) inputting means for inputting an identifier; and
g) means for relating said identifier with said directory in said first storing means.

4. The apparatus of claim 3, further comprising:
h) display means for displaying said identifier about said directory in said first storing means.

5. A method of storing data and transferring data from first storing means to second storing means, comprising the steps of:
a) making a directory where said data is to be stored in said first storing means;
b) storing said data into said directory in said first storing means;
c) saving said data from said directory in said first storing means to a relief area;
d) moving said directory from said first storing means to said second storing means with the same path name as that for said directory being maintained; and
e) transferring said data from said relief area to said directory moved to said second storing means, wherein
said step a) comprises the step of enabling first identifying means when said directory is made in said first storing means,
said step d) comprises the step of enabling second identifying means when said directory is moved to said second storing means,
duplication of a directory having the same path name as that for said directory in either said first storing means or said second storing means is prohibited in case that said first identifying means or said second identifying means is enabled.

6. The method of claim 5, further comprising the steps of:
f) inputting an identifier;
g) relating said identifier with said directory in said first storing means; and
h) erasing said identifier when said directory is moved to said second storing means.

7. The method of claim 6, further comprising the step of:
i) displaying said identifier about said directory in said first storing means.

## Patentansprüche

1. Vorrichtung zur Speicherung von Daten und Übertragung von Daten aus ersten Speichermitteln in zweite Speichermittel, welche aufweist:
a) Mittel zur Erstellung eines Verzeichnisses, wo die Daten in den ersten Speichermitteln zu Speichern sind;
b) Mittel zur Speicherung der Daten in das Verzeichnis in den ersten Speichermitteln;
c) Mittel zur Sicherung der Daten aus dem Verzeichnis in den ersten Speichermitteln in einem Entlastungsbereich;
d) Mittel zur Bewegung des Verzeichnisses aus den ersten Speichermitteln in die zweiten Speichermittel unter Aufrechterhaltung des gleichen Pfadnamens wie derjenige für das Verzeichnis; und
e) Mittel zur Übertragung der Daten aus dem Entlastungsbereich auf das in die zweiten Speichermittel bewegte Verzeichnis, wobei
die Mittel a) erste Identifizierungsmittel umfassen, welche freigegeben werden, wenn das Verzeichnis in den ersten Speichermitteln erstellt wird,
die Mittel d) zweite Identifizierungsmittel umfassen, welche freigegeben werden, wenn sich das Verzeichnis in die zweiten Speichermittel bewegt, und
eine Duplizierung eines Verzeichnisses mit dem gleichen Pfadnamen wie demjenigen für das Verzeichnis in den ersten Speichermitteln oder zweiten Speichermitteln verhindert ist, falls die ersten Identifizierungsmittel oder die zweiten Identifizierungsmittel freigegeben sind.

2. Vorrichtung nach Anspruch 1, wobei
entweder die ersten Identifizierungsmittel oder die zweiten Speichermittel Kennzeichenmittel aufweisen.

3. Vorrichtung nach Anspruch 1, welche ferner aufweist:
f) Eingabemittel zur Eingabe eines Identifizierers; und
g) Mittel zum In-Beziehung-Setzen des Identifizierers mit dem Verzeichnis in den ersten Speichermitteln.

4. Vorrichtung nach Anspruch 3, welche ferner aufweist:
h) Anzeigemittel zur Anzeige des Identifizierers über das Verzeichnis in den ersten Speichermitteln.

5. Verfahren zur Speicherung von Daten und Übertragung von Daten aus ersten Speichermitteln in zweite Speichermittel, welches die folgenden Schritte aufweist:
a) Erstellen eines Verzeichnisses, wo die Daten in den ersten Speichermitteln zu speichern sind;
b) Speichern der Daten in das Verzeichnis in den ersten Speichermitteln;
c) Sichern der Daten aus dem Verzeichnis in den ersten Speichermitteln in einem Entlastungsbereich;
d) Bewegen des Verzeichnisses aus den ersten Speichermitteln in die zweiten Speichermittel unter Aufrechterhaltung des gleichen Pfadnamens wie derjenige für das Verzeichnis; und
e) Übertragen der Daten aus dem Entlastungsbereich in das in die zweiten Speichermittel bewegte Verzeichnis, wobei
der Schritt a) den Schritt der Freigabe erster Identifizierungsmittel, wenn das Verzeichnis in den ersten Speichermitteln erstellt wird, aufweist,
der Schritt d) den Schritt der Freigabe zweiter Identifizierungsmittel, wenn das Verzeichnis in die zweiten Speichermittel bewegt wird, aufweist, und
eine Duplizierung eines Verzeichnisses mit dem gleichen Pfadnamen wie demjenigen für das Verzeichnis in den ersten Speichermitteln oder zweiten Speichermitteln verhindert ist, falls die ersten Identifizierungsmittel oder die zweiten Identifizierungsmittel freigegeben sind.

6. Verfahren nach Anspruch 5, welches ferner die folgenden Schritte aufweist:
f) Eingeben eines Identifizierers;
g) In-Beziehung-Setzen des Identifizierers mit dem Verzeichnis in den ersten Speichermitteln; und
h) Löschen des Identifizierers, wenn das Verzeichnis in die zweiten Speichermittel bewegt wird.

7. Verfahren nach Anspruch 6, welches ferner folgenden Schritt aufweist:
i) Anzeigen des Identifizierers über das Verzeichnis in den ersten Speichermitteln.

## Revendications

1. Dispositif destiné à mémoriser des données et à transférer des données d'un premier moyen de mémorisation vers un second moyen de mémorisation, comprenant :
a) un moyen destiné à établir un répertoire où lesdites données doivent être mémorisées dans ledit premier moyen de mémorisation,
b) un moyen destiné à mémoriser lesdites données dans ledit répertoire dans ledit premier moyen de mémorisation,
c) un moyen destiné à sauvegarder lesdites données dudit répertoire dans ledit premier moyen de mémorisation vers une zone de délestage,
d) un moyen destiné à déplacer ledit répertoire dudit premier moyen de mémorisation audit second moyen de mémorisation avec le même nom de chemin d'accès que celui dudit répertoire qui est conservé, et
e) un moyen destiné à transférer lesdites données de ladite zone de délestage audit répertoire déplacé vers ledit second moyen de mémorisation, dans lequel
ledit moyen a) comprend un premier moyen d'identification qui est validé lorsque ledit répertoire est établi dans ledit premier moyen de mémorisation,
ledit moyen d) comprend un second moyen d'identification qui est validé lorsque ledit répertoire se déplace vers ledit second moyen de mémorisation, et
la duplication d'un répertoire ayant le même nom de chemin d'accès que celui pour ledit répertoire soit dans ledit premier moyen de mémorisation soit dans ledit second moyen de mémorisation est interdite dans le cas où ledit premier moyen d'identification ou bien ledit second moyen d'identification est validé.

2. Dispositif selon la revendication 1, dans lequel
soit ledit premier moyen d'identification, soit ledit second moyen d'identification, comprend un moyen d'indicateur.

3. Dispositif selon la revendication 1, comprenant en outre :
f) un moyen d'entrée destiné à appliquer en entrée un identificateur, et
g) un moyen destiné à lier ledit identificateur audit répertoire dans ledit premier moyen de mémorisation.

4. Dispositif selon la revendication 3, comprenant en outre :
h) un moyen d'affichage destiné à afficher ledit identificateur concernant ledit répertoire dans ledit premier moyen de mémorisation.

5. Procédé de mémorisation de données et de transfert de données d'un premier moyen de mémorisation à un second moyen de mémorisation, comprenant les étapes consistant à :
a) établir un répertoire où lesdites données doivent être mémorisées dans ledit premier moyen de mémorisation,
b) mémoriser lesdites données dans ledit répertoire dans ledit premier moyen de mémorisation,
c) sauvegarder lesdites données dudit répertoire dans ledit premier moyen de mémorisation vers une zone de délestage,
d) déplacer ledit répertoire dudit premier moyen de mémorisation audit second moyen de mémorisation avec le même nom de chemin d'accès que celui pour ledit répertoire qui est conservé, et
e) transférer lesdites données de ladite zone de délestage vers ledit répertoire déplacé vers ledit second moyen de mémorisation, dans lequel
ladite étape a) comprend l'étape consistant à valider un premier moyen d'identification lorsque ledit répertoire est établi dans ledit premier moyen de mémorisation,
ladite étape d) comprend l'étape consistant à valider le second moyen d'identification lorsque ledit répertoire est déplacé vers ledit second moyen de mémorisation,
la duplication d'un répertoire ayant le même nom de chemin d'accès que celui dudit répertoire, soit dans ledit premier moyen de mémorisation, soit dans ledit second moyen de mémorisation est interdite dans le cas où ledit premier moyen d'identification ou bien ledit second moyen d'identification est validé.

6. Procédé selon la revendication 5, comprenant en outre les étapes consistant à :
f) appliquer en entrée un identificateur,
g) lier ledit identificateur audit répertoire dans ledit premier moyen de mémorisation, et
h) effacer ledit identificateur lorsque ledit répertoire est déplacé vers ledit second moyen de mémorisation.

7. Procédé selon la revendication 6, comprenant en outre l'étape consistant à :
i) afficher ledit identificateur concernant ledit répertoire dans ledit premier moyen de mémorisation.
